Europäisches Patentamt

European Patent Office

Office européen des brevets

(11) Publication number: **0 035 813**
**B1**

(12) **EUROPEAN PATENT SPECIFICATION**

(45) Date of publication of patent specification: **21.08.85**

(21) Application number: **81200239.2**

(22) Date of filing: **27.02.81**

(51) Int. Cl.⁴: **B 65 G 47/51**

(54) **Surge unit.**

(30) Priority: **06.03.80 NL 8001359**

(43) Date of publication of application:
**16.09.81 Bulletin 81/37**

(45) Publication of the grant of the patent:
**21.08.85 Bulletin 85/34**

(84) Designated Contracting States:
**AT BE CH DE FR GB IT LI LU NL SE**

(56) References cited:
**AT-A- 309 300**
**US-A-3 470 996**

(73) Proprietor: **WAVIN B.V.**
**Händellaan 251**
**NL-8031 EM Zwolle (NL)**

(72) Inventor: **Herder, Kornelis**
**2 Bilderdijkstraat**
**NL-7471 XZ Goor (NL)**

(74) Representative: **van der Veken, Johannes**
**Adriaan et al**
**EXTERPATENT Willem Witsenplein 4**
**NL-2596 BK 's-Gravenhage (NL)**

Courier Press, Leamington Spa, England.

## Description

The invention relates to a surge unit for successively conveying products or groups of products between two processing- or operating stations comprising a surge conveyor to be positioned in the path of travel of the product comprising a supply conveyor and a discharge conveyor, said surge conveyor being provided with successive storing accommodations, the working direction of said surge conveyor making an angle with the direction of the product stream, said surge conveyor being in phase with the product stream and with opposite working directions being switched on or out at choice.

Such a surge unit comprising a supply conveyor and a surge conveyor intersecting each other is known from AT—A—309 300. When the surge conveyor stands still the products on the supply conveyor pass along said surge conveyor but if the surge conveyor is driven products on the supply conveyor will be removed by catching means.

This surge unit presents the drawback that the surge conveyor cannot rapidly act if a sudden interruption of the supply of products by a supply conveyor occurs as the products have to be transferred from a conveyor upon the surge conveyor by means of separate catching means.

It is the aim of the present invention to alleviate the above-identified problems and in accordance with the invention, this is attained in that in a stationary state of the surge conveyor each supplied product is transferred from the supply conveyor onto a storing accommodation of the surge conveyor and this product can then be pushed from this storing accommodation onto a discharge conveyor, said storing accommodation of the surge conveyor being immediately replaceable with a subsequent storing accommodation of the surge conveyor during interruption of the product stream.

The use of a surge unit in accordance with the invention has the beneficial results that any problem concerning temporary differences in capacity between a product supplying machine and a product receiving machine can be obviated if an interruption in the operation of one of said machines occurs. The surge conveyor acts rapidly and automatically when eg. products are lacking in a compartment of the supply conveyor.

It should be noted that it is known from US—A—3.470.996 to push a product from a surge conveyor of a surge unit upon a discharge conveyor but in this case the surge conveyor is not positioned immediately behind the end of the supply conveyor so that separate ejecting means are required for pushing the products from the supply conveyor to the surge conveyor. This surge unit cannot act as rapidly as the surge unit of the invention.

In a preferred embodiment the surge conveyor is located at the end of a supply conveyor provided with compartments for the products and the storing accommodations of the surge conveyor are able to receive products falling from a compartment of the supply conveyor.

This provides a smooth action of the surge conveyor.

According to another preferred embodiment the storing accommodations of the surge conveyor are constructed as channels for allowing the pushing of the products of the supply conveyor to a discharge conveyor forming a prolongation of the as a channel constructed storing accommodation. In this way the products in a storage accommodation of the surge conveyor can be easily conveyed to the discharge conveyor by means of a pushing element acting from an open lateral side of the channel constructed storing accommodation.

The surge conveyor need not necessarily be disposed directly between two operating units or processing machines, but according to the invention said surge conveyor should preferably be positioned such, that the surge conveyor functioning as a store is disposed at the end of a supply conveyor for products or groups of products, while the storing accommodations of the surge conveyor functioning as a store are able to cooperate with storing compartments provided upon the supply conveyor.

If presently the operation of a product receiving machine is interrupted for some time, the products being supplied by a first machine may be stored in the storing accommodations of the surge conveyor functioning as a store. As soon as the product receiving machine is able to continue its operation, the flow of products can be continued in a normal way; in case of a temporary interruption in the operation of a product supplying machine, products from the storing accommodations in the surge conveyor functioning as a store, may be delivered to the product receiving machine.

The present invention will be illustrated with respect to an embodiment in the drawing, wherein:

Fig. 1 shows a diagrammatical side view of a surge unit comprising a surge conveyor cooperating with a supply conveyor:

Fig. 2 shows a perspective view of a part of a surge unit as diagrammatically shown in fig. 2.

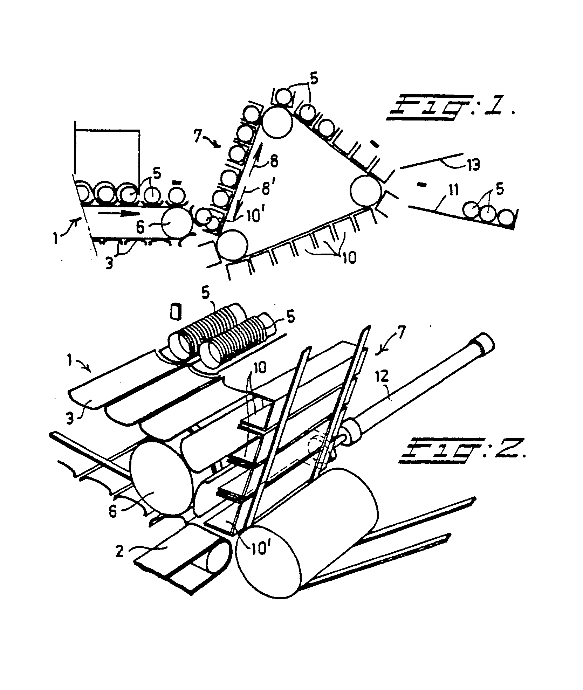

A surge unit according to the invention comprises a supply conveyor 1, cooperating with a discharge conveyor 2 (vide fig. 2) being under an angle with respect to the supply conveyor which conveyors are disposed between two operating units in the path of travel of the products. The first operating unit is eg. a cup forming machine supplying cups to supply conveyor 1 and the second operating unit is eg. a printing machine adapted to provide the cups with a printing, said printing machine being fed by discharge conveyor 2. The operative direction of the conveyor 1 is illustrated by an arrow in fig. 1. Said conveyors consist of endless belts or chains, the conveyor 1 being provided with storing compartments 3 into which compartments products or groups of products 5, in the form of margarine cups can be

received. Said margarine cups which are, for instance, produced by an operating unit (not shown) are fed to the compartments 3 of the conveyor 1 and may be previously nested into one another in order to facilitate for a further processing, so that they form a groups of products.

It will be obvious that in case of an interruption in the operation of the printing machine and the cup-supplying machine continuing its operations, a build-up of products will occur in the path of travel between the two operating units. In order to terminate and quickly remove said buildup a surge conveyor 7 is comprising an alternately controlling discharge and supply direction as is shown in the drawing by the arrow 8 and the dotted arrow 8', whereby arrow 8 illustrates the discharge direction. The surge conveyor 7 in the form of an elevator chain or belt is provided with consecutive storing accommodation 10 and 10'.

In the stationary state which is under normal conditions, when the two operating units are both functioning in an uninterrupted manner and the surge conveyor functioning as a store stands still, the products and in the present embodiment the groups of products 5, will land from the compartments 3 of the supply conveyor onto the storing accommodation 10' under the influence of the return roller 6. An ejecting member 12 disposed sidewise of the storing accommodation 10', for instance a pneumatic cylinderpiston system, ejects groups of products 5 through the storing accommodation 10' upon the discharge conveyor 2 which subsequently supplies said products to the second operating unit, e.g. in the form of a printing machine.

During an interruption of the second operating unit the products 5 cannot be ejected by means of ejecting member 12 upon the discharge conveyor 2 and in that case storing accommodation 10' will be immediately replaced by other free storing accommodations 10 by moving the surge conveyor into the direction of arrow 8.

When all storing accommodations 10 are filled and the period of stand still of the respective machine still continues, the products 5 or groups of products 5 will arrive upon a stacking platform 11, from which they can be removed manually. The capacity of the conveyor 7 in the form of an elevator chain or belt is, however, so great, that during a small period of stand still of the second operating unit, said stacking platform 11 need seldom be used.

During an interruption of the first operating unit the surge conveyor 7 will move into the direction of arrow 8' so that storing accommodations 10 will act as storing accommodation 10' so that products 5 are ejected upon discharge conveyor 2 and second operating unit is able to function in a normal way.

Should the number of storing accommodations 10 be insufficient for a subsequent filling of the discharge conveyor 2, the products or groups of products have to be manually accommodated upon an auxiliary supply platform 13, so as to fill fresh storing accommodations 10. It should be noted, however, that such long stand still periods of the first operating unit seldom occurs.

It will be obvious that the surge means may be controlled entirely automatically, the operating units of the conveyors being provided with detectors, if necessary, which detectors energize a logical system for carrying out the various functions of the respective devices. The use of detectors is known in practice and need not be elucidated. It will also be obvious that the surge station according to the invention may also be active when an interruption will occur in the path of travel of the products between the two operating units, for instance due to a product or a group of products falling out of a compartment, this even at the event that the two operating units function normally.

It will be clear from the foregoing that the provision of a surge station in accordance with the invention will prevent a stand still of the production line if one of the operating units, for instance in the form of a supplying or receiving machine, will come to a temporary stand still, e.g. due to a malfunction of the respective unit or due to another accidental interruption.

**Claim:**

1. Surge unit for successively conveying products or groups of products (5) between two processing— or operating stations comprising a surge conveyor (1) to be positioned in the path of travel of the product (5) comprising a supply conveyor (1) and a discharge conveyor (2), said surge conveyor (7) being provided with successive storing accommodations (10), the working direction of said surge conveyor (7) making an angle with the direction of the product stream, said surge conveyor (7) being in phase with the' product stream and with opposite working directions (8, 8') being switched on or out at choice, characterized in that in a stationary state of the surge conveyor (7) each supplied product (5) is transferred from the supply conveyor (1) onto a storing accommodation (10') of the surge conveyor (7) and this product can then be pushed from this storing accommodation (10') onto a discharge conveyor (2), said storing accommodation (10') of the surge conveyor (7) being immediately replaceable with a subsequent storing accommodation (10) of the surge conveyor during interruption of the product stream.

2. Surge unit according to claim 1, characterized in that the surge conveyor (7) is located at the end of a supply conveyor (1) provided with compartments (3) for the products (5) and the storing accommodations (10) of the surge conveyor (7) are able to receive products falling from a compartment (3) of the supply conveyor (1).

3. Surge unit according to claim 1 or 2, characterized in that the storing accommodations (10') of the surge conveyor (7) are constructed as channels for allowing the pushing of the products of the supply conveyor (1) to a discharge conveyor (2) forming a prolongation of the as a channel constructed storing accommodation (10').

4. Surge unit according to any one of claims 1 to 3, characterized in that the surge conveyor (7) cooperates with a separate discharge station for discharging the products outside the product stream between the two processing stations.

## Revendications

1. Unité tampon pour acheminer en succession des produits ou groupes de produits (5) entre deux stations de traitement ou de travail, comprenant un convoyeur tampon (1) destiné à être placé dans la voie de transport du produit (5) qui comprend un convoyeur d'amenée (1) et un convoyeur d'évacuation (2), ledit convoyeur tampon (7) étant pourvu de logements de stockage successifs (10), la direction de déplacement dudit convoyeur tampon (7) formant un certain angle avec la direction d'avance du produit, ledit convoyeur tampon (7) étant en phase avec l'avance du produit et doté de deux sens de déplacement opposés (8, 8') qui peuvent être à volonté mis en service ou hors service, caractérisée en ce que, lorsque le convoyeur tampon (7) est à l'arrêt, chaque produit (5) qui arrive est transféré du convoyeur d'amenée (1) dans un logement de stockage (10') du convoyeur tampon (7) et ce produit peut ensuite être poussé hors de ce logement de stockage (10') sur un convoyeur d'évacuation (2), ledit logement de stockage (10') du convoyeur tampon (7) pouvant être immédiatement remplacé par un logement de stockage consécutif (10) de convoyeur tampon pendant l'interruption de l'avance du produit.

2. Unité tampon selon la revendication 1, caractérisée en ce que le convoyeur tampon (7) est positionné à l'extrémité d'un convoyeur d'amenée (1) pourvu de compartiments (3) pour les produits (5), et les logements de stockage (10) du convoyeur tampon (7) sont aptes à recevoir les produits tombant d'un compartiment (3) du convoyeur d'amenée (1).

3. Unité tampon selon la revendication 1 ou 2, caractérisée en ce que les logements de stockage (10') du convoyeur tampon (7) sont réalisés sous la forme de profilés en U pour permettre aux produits d'être poussés hors du convoyeur d'amenée (1) sur un convoyeur d'évacuation (2) qui constitue un prolongement du logement de stockage (10') réalisé sous la forme d'un profilé en U.

4. Unité tampon selon l'une quelconque des revendications 1 à 3, caractérisée en ce que le convoyeur tampon (7) coopère avec une station, d'évacuation séparée pour extraire les produits de la voie d'avance des produits entre les deux stations de traitement.

## Patentansprüche

1. Puffereinheit zum aufeinanderfolgenden Fördern von Erzeugnissen oder Erzeugnisgruppen (5) zwischen zwei Behandlungs— oder Bearbeitungsstationen, bestehend aus einem im einen Zuförderer (1) und einen Abförderer (2) umfassenden Förderweg des Erzeugnisses (5) anzuordnenden Pufferförderer (7), wobei der Pufferförderer (7) mit aufeinanderfolgenden Speicheraufnahmen (10) versehen ist, die Arbeitsrichtung des Pufferförderers (7) einen Winkel zur Richtung des Erzeugnisstroms einnimmt und der Pufferförderer (7) mit dem Erzeugnisstrom im Gleichtakt steht sowie über wahlweise ein- oder ausschaltbare, gegenläufige Arbeitsrichtungen (8, 8') verfügt, dadurch gekennzeichnet, daß in einem stationären Zustand des Pufferförderers (7) jedes zugeförderte Erzeugnis (5) vom Zuförderer (1) an eine Speicheraufnahme (10') des Pufferförderers (7) übertragen wird und dieses Erzeugnis sodann von dieser Speicheraufnahme (10') auf einen Abförderer (2) geschoben werden kann und daß die genannte Speicheraufnahme (10') des Pufferförderers (7) unmittelbar durch eine nachfolgende Speicheraufnahme (10) des Pufferförderers während einer Unterbrechung des Erzeugnisstroms ersetzbar ist.

2. Puffereinheit nach Anspruch 1, dadurch gekennzeichnet, daß der Pufferförderer (7) am Ende eines mit Gefachen (3) für die Erzeugnisse (5) versehenen Zuförderers (1) angeordnet ist und die Speicheraufnahmen (10) des Pufferförderers (7) in der Lage sind, Erzeugnisse aufzunehmen, die aus einem Gefach (3) des Zuförderers (1) herausfallen.

3. Puffereinheit nach Anspruch 1 oder 2, dadurch gekennzeichnet, daß die Speicheraufnahmen (10) des Pufferförderers (7) als Rinnen ausgebildet sind, damit die Erzeugnisse des Zuförderers (1) auf einen Abförderer (2) schiebbar sind, der eine Verlängerung der als Rinne ausgebildeten Speicheraufnahme (10') bildet.

4. Puffereinheit nach einem der Ansprüche 1 bis 3, dadurch gekennzeichnet, daß der Pufferförderer (7) mit einer gesonderten Abgabestation zum Abgeben der Erzeugnisse außerhalb des Erzeugnisstroms zwischen den beiden Arbeitsstationen zusammenwirkt.

FIG:1.

FIG:2.

1